# EUROPEAN PATENT SPECIFICATION

(11) **EP 1 266 245 B1**
(45) Date of publication and mention of the grant of the patent: **28.04.2004**
(21) Application number: 01917450.7
(22) Date of filing: 02.03.2001
(51) Int. Cl.: G01V 8/22, G08B 13/184

(54) **ANTI-THEFT DEVICE FOR BUILDINGS**
DIEBSTAHLSICHERUNGSGERÄT FÜR GEBÄUDE
DISPOSITIF ANTIVOL POUR BATIMENTS

(30) Priority: 13.03.2000 IT MI000500
(43) Date of publication of application: 18.12.2002
(73) Proprietor: Prescendo, Renato, 26841 Casalpusterlengo (IT)
(72) Inventor: Prescendo, Renato, 26841 Casalpusterlengo (IT)
(74) Representative: Pizzoli, Antonio
(86) International application number: PCT/IT2001/000104
(87) International publication number: WO 2001/069287

(56) References cited:
- EP-A- 0 928 923
- US-A- 3 623 057
- US-A- 3 842 263
- US-A- 4 862 141
- US-A- 5 063 288
- US-A- 5 559 496
- US-A- 5 638 046

## Description

The present invention relates to an anti-theft device for buildings, and in particular to an anti-theft device provided with a system that detects by means of light emitters and optoelectronic detectors an intrusion, if any, into a building.

It is known that at present there are many kinds of anti-theft devices for civil or industrial buildings, which are provided with one or more detection systems comprising for instance electronic, magnetic and/or mechanic sensors connected to one or more central units. These anti-theft devices work in environments having closed doors and windows, while they must be turned off when at least one door and/or window is opened, for instance during the summer nights, for avoiding accidental alarms.

US 5 063 288 and EP 928 923 disclose security devices employing laser or optical plane signals to cover a corresponding surface. However, these known devices are relatively complex and expensive to be manufactured, installed and maintained, due to the scattering device and the plurality of sensors needed for respectively transmitting and receiving those plane signals.

It is therefore an object of the present invention to provide an anti-theft device which is not only easy and inexpensive to be manufactured, installed and maintained, but also can work also in rooms having open doors and/or windows, wherein the users are free to move from a room to another one without turning off the anti-theft device. Said object is achieved with an anti-theft device, the main features of which are specified in the first claim, while other features are specified in the subsequent claims.

Thanks to the light emitter, to the optoelectronic receiver and to the adjustable reflecting or refracting devices which are provided with, one or more detection systems of the anti-theft device according to the present invention can be arranged outside the door or window opening of a building, so that they can detect its crossing in case of intrusion of unauthorized persons, even when this door or window is open.

Another advantage of the anti-theft device according to the present invention lies in the reduced hindrance of the detection systems obtained thanks to the particular arrangement and structure of the electric and electronic circuit they are provided with.

Another advantage of the anti-theft device according to the present invention lies in the high protection of the detection systems against the atmospheric agents and the tampering of ill-intentioned persons. Said protection is obtained by means of auxiliary electric and/or electronic devices, such as for instance movement sensors and buffer batteries, which are arranged together with the light emitters and the optoelectronic receivers, on boards covered with a hard resin layer.

These and other features of the anti-theft device according to the present invention, as well as the objects and the advantages deriving therefrom, will be clear from the following and detailed description of three embodiments thereof, disclosed for a non-limiting example, with reference to the attached drawings, wherein:
- figure 1 shows a schematic view of a detection system and the central unit of the anti-theft device according to the first embodiment of the invention;
- figure 2 shows an exploded perspective view of the detection system of figure 1;
- figures 3, 4 and 5 show three exploded perspective views of a detection system of the anti-theft device according to the second embodiment of the invention;
- figure 6 shows a perspective view of the detection system of figure 1 applied to a window;
- figure 7 shows a perspective view of the detection system of figures 3, 4 and 5 applied to a window;
- figure 8 shows a schematic view of a detection system and the central unit. of the anti-theft device according to the third embodiment of the invention;
- figure 9 shows an exploded perspective view of the detection system of figure 8;
- figure 10 shows a perspective view in a partial cross-section of the detection system of figure 8;
- figure 11 shows a perspective view of the detection system of figure 8; and
- figures 12 and 13 show two detailed exploded views of the reflecting devices of the detection system of figure 8.

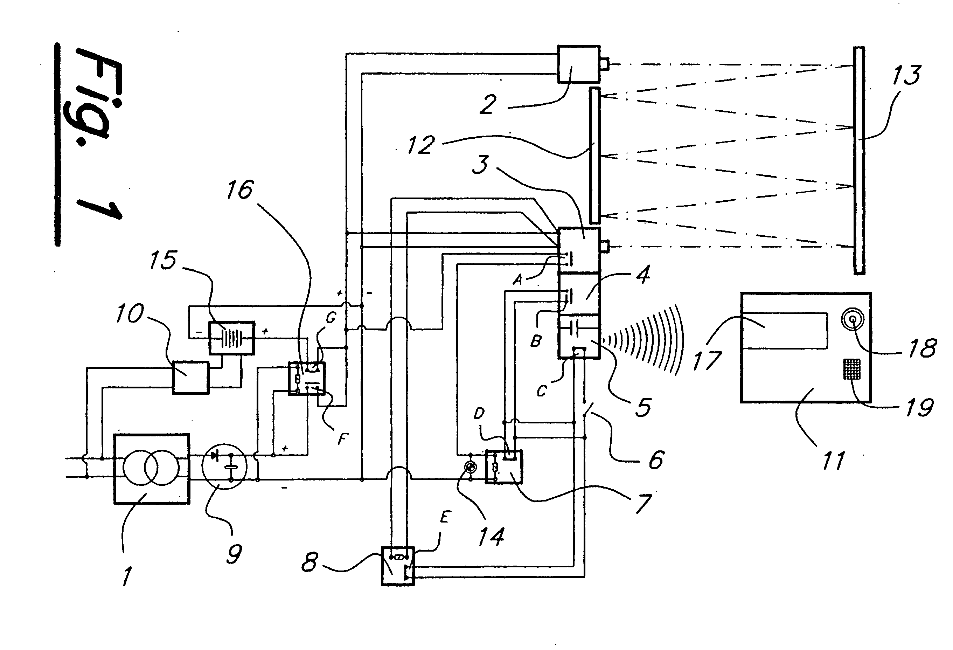

Referring to figure 1, it is seen that the detection system of the anti-theft device according to the first embodiment of the invention comprises in a known way an electric power source consisting of a single-phase transformer 1 connected to a network socket, for instance at 220 V. The alternated low voltage output from transformer 1 is transformed by a voltage rectifier 9 into a continuous voltage, for instance at 12 V. This continuous voltage feeds the coils of two relays 7 and 16, a light emitter 2, for instance infrared or laser, and an optoelectronic receiver 3 sensitive to the light signal emitted by emitter 2. The intensity and/or the frequency of the signal of emitter 2 are preferably variable according to a known coding process, for instance by using a programmed integrated circuit which makes the light signal of emitter 2 intermittent. Analogously, the optoelectronic receiver 3 can comprise known means for decoding the signal transmitted by emitter 2. The negative terminal at the output of rectifier 9 is directly connected to a pilot lamp 14 and to the coil of relay 9. The positive terminal at the output of rectifier 9 is connected through the NO (normally open) auxiliary contact F of relay 16 to the feeding contacts of the light emitters 2 and of the optoelectronic receiver 3. Furthermore, the NO (normally open) auxiliary contact F of relay 16 is connected to the NO (normally open) auxiliary contact A of the optoelectronic receiver 3, passing then to the pilot lamp 15 and to the coil of relay 7. The NC (normally closed) auxiliary contact D of relay 7 is directly connected to the NO (normally open) auxiliary contact B of a movement sensor 4. A terminal of the NC (normally closed) contact D of relay 7 is connected to the NC (normally closed) auxiliary contact C of a radio transmitter 5, while the other terminal is connected through a one-pole switch 6 to the second NC (normally closed) auxiliary contact C of the radio transmitter 5. The coil of a relay 8 is fed from the feeding terminals of the optoelectronic receiver 3, coming from rectifier 9. A first terminal of the NC (normally closed) auxiliary contact E of relay 8 is directly connected to the NC (normally closed) auxiliary contact C of the radio transmitter 5, while the second terminal crosses the one-pole switch 6 and is in turn connected to the second NC (normally closed) contact C of the radio transmitter 5. If at any time the electric energy lacks, relay 16 is automatically excluded, so that the auxiliary contact F is opened and the auxiliary contact G is closed for uninterrupting the positive pole of the buffer battery 15, thereby keeping the anti-theft device active for a determined time. When the electric energy returns, the coil of relay 16 is excited, contact G is opened and contact F is closer for uninterrupting the positive terminal of rectifier 9, thereby excluding the buffer battery 15. Contemporaneously, a battery charger 10 connected to the network charges battery 15 up to its maximum capacity for being ready for a new emergency situation.

The detection system of the anti-theft device according to the present invention is turned on by moving the one-pole switch 6 in the open position, so as to turn off the radio transmitter 5. By supplying electric energy to transformer 1, if the pilot lamp 14 is on, the whole system is fed, so that the one-pole switch 6 can be manually moved in the closed position. When this sequence is ended, the system is active and then ready to signal an intrusion. The movement sensor 4, inserted into the electronic board of the optoelectronic receiver 3, is activated only when the system is tampered or is moved from its initial position. In this case the NO (normally open) auxiliary contact B is closed and activates the radio transmitter 5. If the light signal transmitted by emitter 2 is interrupted, the auxiliary contact A of the optoelectronic receiver 3 is opened, thereby turning off the coil of relay 7 which in turn closes contact D, thereby activating the radio transmitter 5. This situation is also obtained by removing the feeding voltage from the optoelectronic receiver 3, in which case the coil of relay 8 is automatically turned off, thereby closing contact E and activating the radio transmitter 5. The radio transmitter 5 is coded in a known way and is autonomously fed by a battery (not shown in the figure), both inserted into the electronic board of the optoelectronic receiver 3 together with the movement sensor 4, so that it can work also when the electric energy lacks, due for example to the cut of the electric wires feeding the system or to a network electric energy lack. A central unit 11 of the known kind is provided with visual 18 and/or sound 19 signaling devices, as well as with a radio receiver 17 for receiving from the radio transmitter 5 a coded signal variable according to the reception of the light signal in the optoelectronic receiver 3. Said central unit can be arranged in a position in which it can receive the signals of the radio transmitters 5 of one or more detection systems arranged in the different openings of a building.

The detection system of the anti-theft device according to the present invention suitably comprises, besides the light emitter 2 and the optoelectronic receiver 3, reflecting or refracting devices 12, 13 to be arranged along at least two opposite walls of the opening of a door or window so that the signal of emitter 2 is reflected or refracted from a wall to the other to the optoelectronic receiver 3.

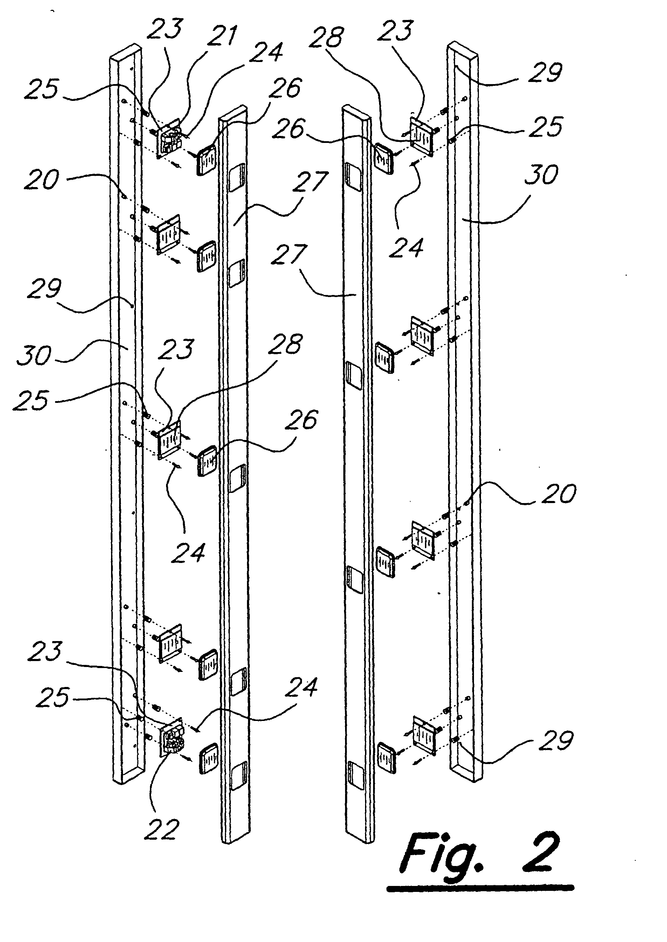

With reference to figure 2, it is seen that in the detection system of the anti-theft device according to the first embodiment of present invention an electronic board 21 comprising the light emitter 2 is glued onto a plastic plate 23 pushed by springs 25 and provided with three holes in which the same number of screws 24 are inserted for precisely adjusting the orientation of the plate itself. Screws 24 are screwed in suitable cylindrical seats 20 protruding from the inside of a container 30 provided with holes 29 for the screw fixing to a wall of the opening of a building. The reflecting or refracting devices 12 and 13, each housed in a container 30, are arranged at a distance which can vary according to the size of said opening and suitably comprise reflecting or refracting members, such as for instance mirrors 28, prisms or stainless steel metal plates finished as mirrors. Mirrors 28 are glued onto a plurality of plates 23 identical to the plate used for board 21. By using the same mounting and adjusting method in containers 30, i.e. with screws 24 and springs 25, mirrors 28 are precisely oriented, so as to reflect the light signal emitted by emitter 2 to another mirror 28 which in turn reflects said signal, and so on to the optoelectronic receiver 3 arranged in a board 22 in turn fixed onto a plate 23 in a container 30. When all mirrors 28 are mounted and adjusted, containers 30 are hermetically closed by covers 27 by means of a pressure system comprising protruding side surfaces which couple with suitable recesses provided along the edges of containers 30. Covers 27, in correspondence with boards 21, 22 and mirrors 28, are provided with a plurality of rectangular openings closed by windows 26 made of transparent plastic.

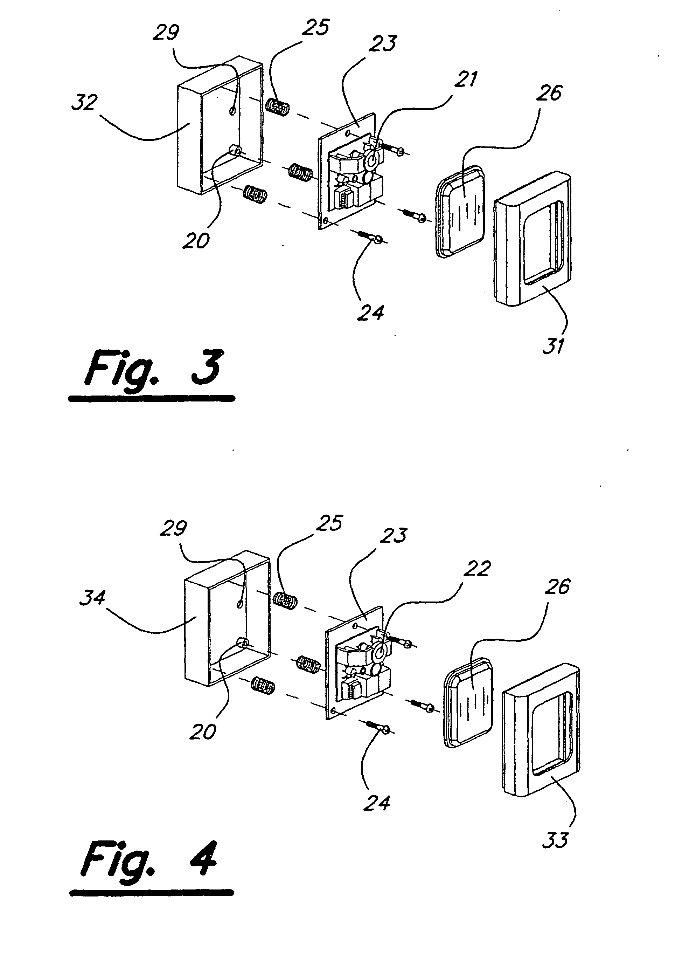

Referring to figures 3, 4 and 5, it is seen that in the second embodiment of the invention mirrors 28, boards 21 and 22 respectively comprising the light emitter 2 and the optoelectronic receiver 3 are the same as those of the first embodiment, but are singularly inserted in the same number of containers 32, 34, 36 closed by covers 31, 33, 35 provided with a window 26 made of transparent plastic. Mirrors 28 and boards 21 and 22 are always glued onto plastic plates 23 pushed by springs 25 and provided with three holes in which the same number of screws 24 are inserted for precisely adjusting the orientation of the plates themselves. Screws 24 are screwed in suitable cylindrical seats 20 protruding from the inside of containers 32, 34, 36, each provided with holes 29 for the screw fixing to a wall of the opening of a building.

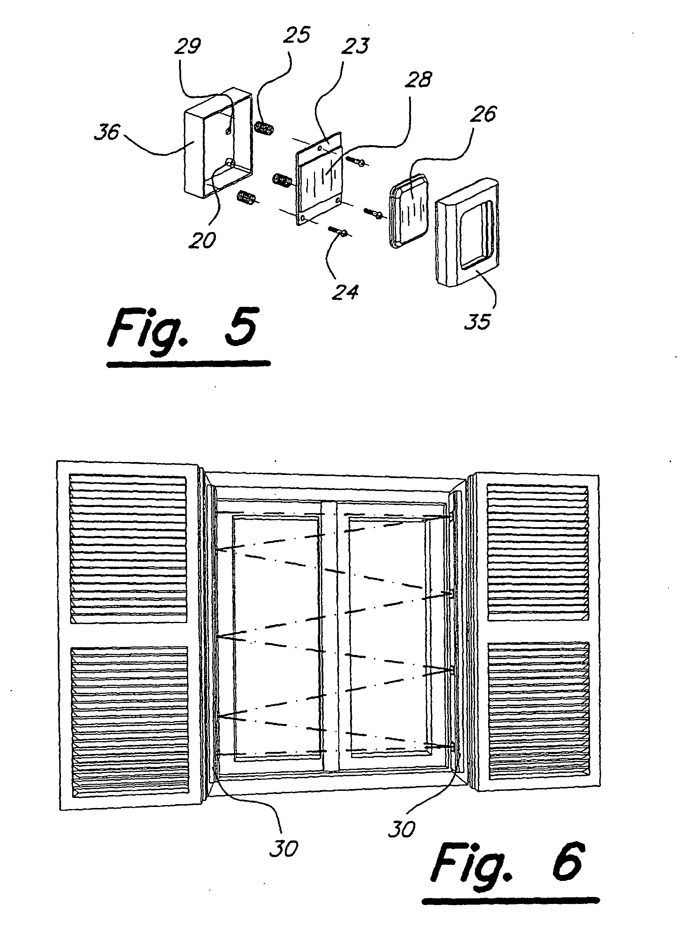

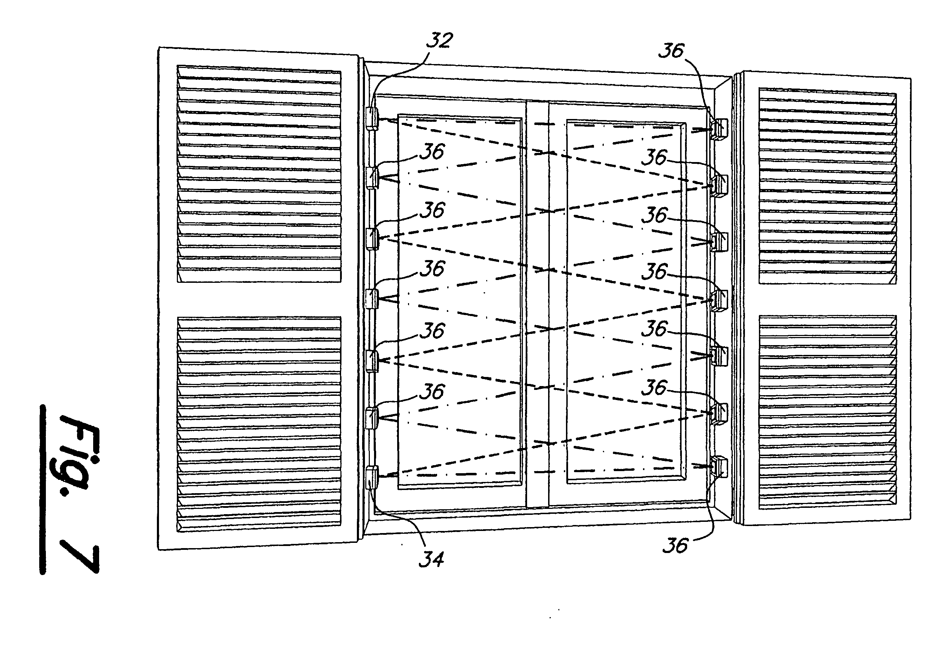

Figures 6 and 7 show an example of how containers 30, 32, 34 and 36 of the detection systems of the anti-theft device according to the present invention are fixed along at least two opposite walls of the opening of a window so that the light signal (shown with a dotted line) from emitter 2 is reflected or refracted from a wall to the other so as to arrive to the optoelectronic receiver 3.

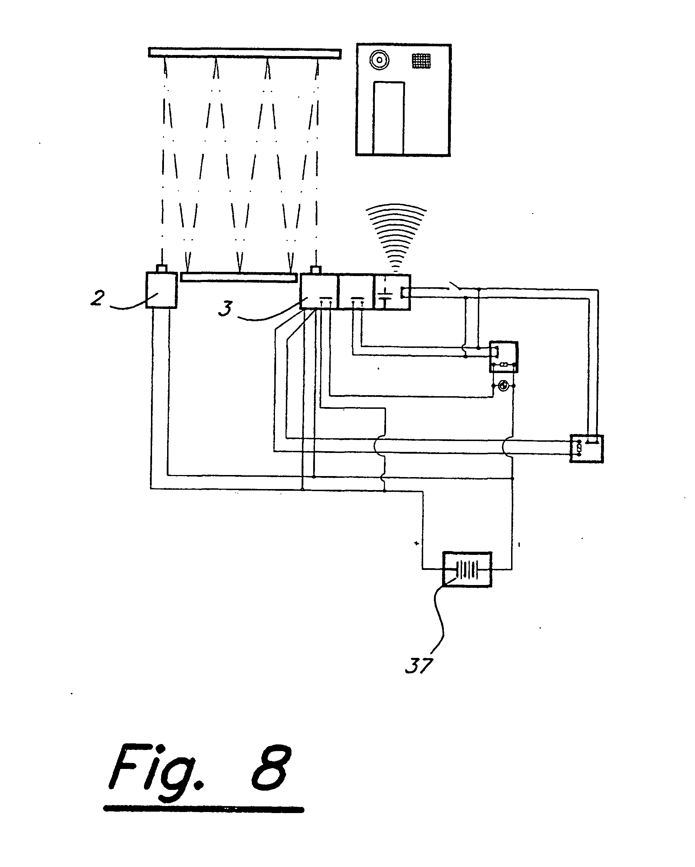

Referring now to figure 8, it is seen that in the third embodiment of the anti-theft device according to the present invention the electric feeding is supplied by at least one battery 37, for instance at 12 V, which is directly connected to emitter 2 and to receiver 3 and can substitute transformer 1, rectifier 9, battery charger 10 and relay 16.

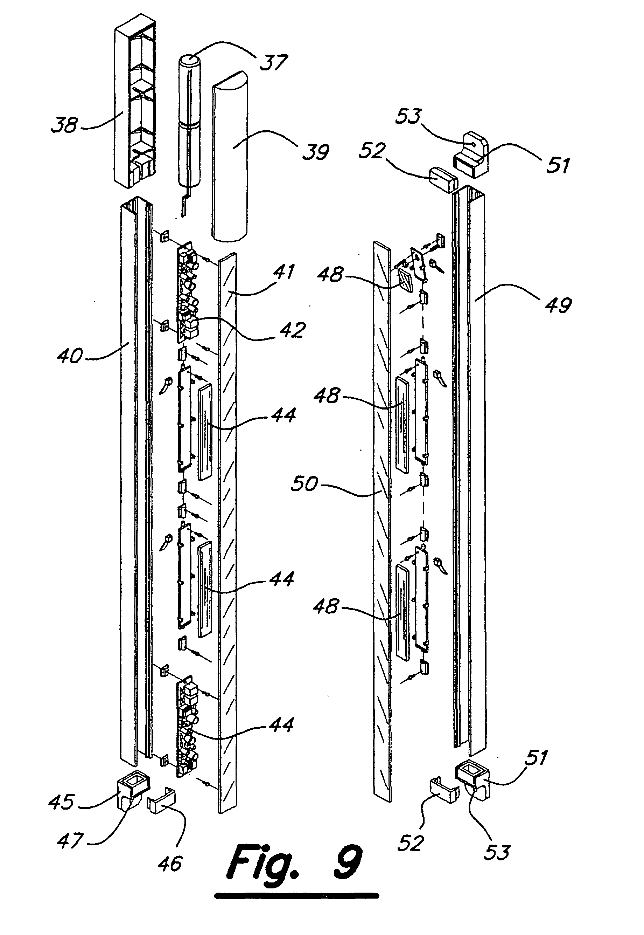

With reference to figure 9, it is seen that battery 37 is arranged inside a parallelepiped-shaped housing 38, which is provided with a cover 39 and is connected to the end of a container 40 made up of a U-shaped section frontally closed by a transparent plate 41. Container 40 comprises two electronic boards 42, 43 respectively including emitter 2, receiver 3, as well as, if desired, one or more electric and/or electronic devices of figure 8, connected to battery 37 by means of electric conductors. Container 40 further comprises reflecting or refracting members 44 of the above described kind, in particular mirrors. The end of container 40 opposite to housing 38 of battery 37 is closed by a shaped member 45 provided with a cover 46 and a hole 47 for the fixing to the wall. The signal emitted by emitter 2 is also reflected or refracted by reflecting or refracting members 48 arranged in a further container 49 made up of a U-shaped section which is frontally closed by a transparent plate 50 and at the ends by a pair of shaped members 51 provided with a cover 52 and a hole 53 for the fixing to the wall.

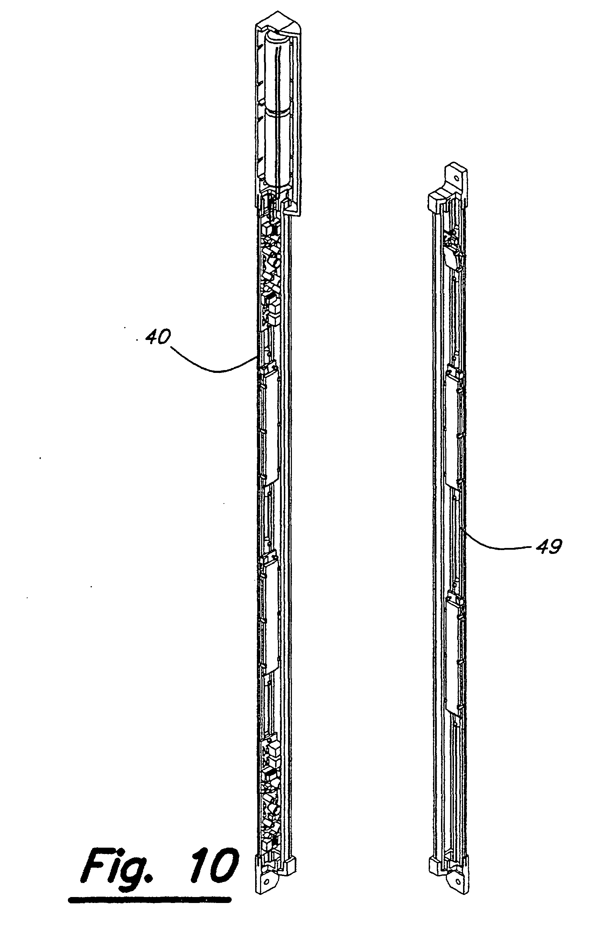

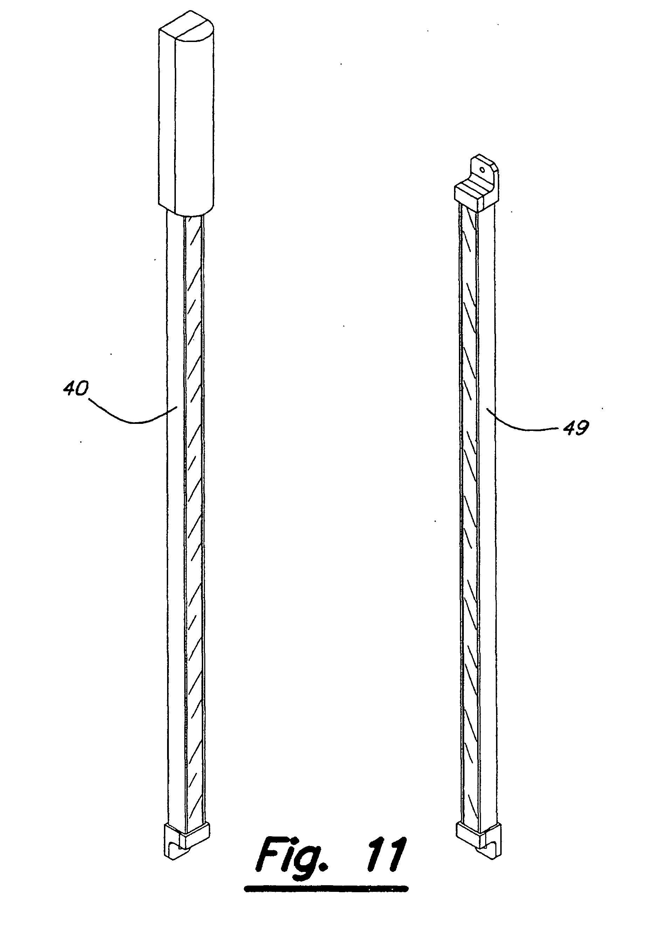

Figures 10 and 11 show the two containers 40 and 49 already assembled and ready for being arranged along at least two opposite walls of the opening of a door or window so that the signal of emitter 2 is reflected or refracted from a wall to the other to the optoelectronic receiver 3.

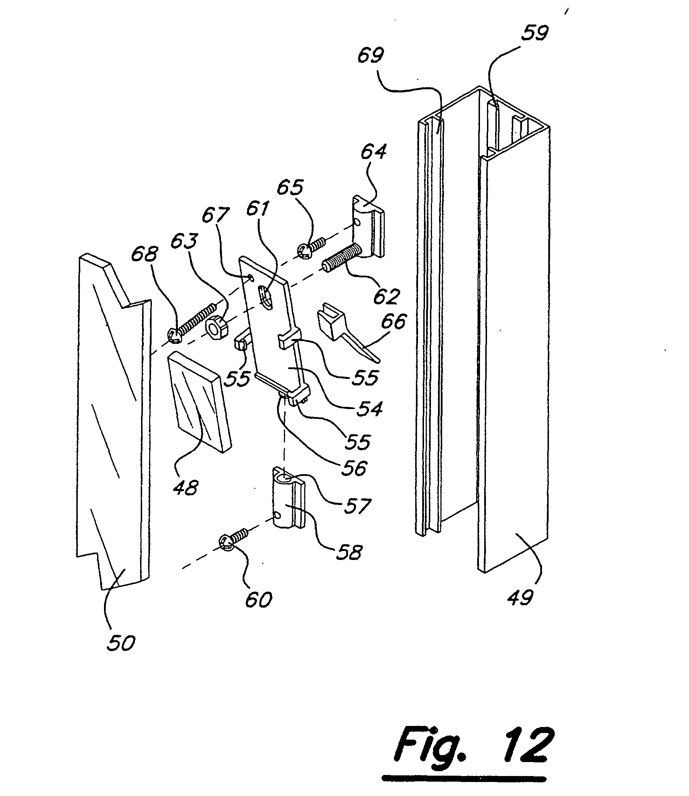

Referring to figure 12, it is seen that the first reflecting or refracting member 48 suitable for directly receiving the light signal emitted by emitter 2 consists of a rectangular mirror mounted onto a plate 54 by means of a plurality of hooks 55. One side of plate 54 is provided with a pin 56 suitable for rotating and oscillating in a seat 57 provided in a member 58 which can slide in a longitudinal guide 59 provided along the wall of container 49 opposite to plate 50. The sliding member 58 can be locked in a position along guide 59 by means of a screw 60. Plate 54 is provided with an eyelet 61 in which a screw 62 is inserted in a sliding and oscillating way. An end of screw 62 is provided with a bolt 63 for locking plate 54, while the other end is fixed to a further member 64 suitable for sliding in the longitudinal guide 59 and for being locked in the desired position by a screw 65. Plate 54 is pushed outwards, i.e. toward bolt 63, by elastic means 66, in particular a lamellar spring, fixed at a side of the same plate. The side of plate 54 opposite to spring 66 is provided with a threaded hole 67 in which a screw 68 with the point pushed by spring 66 against an inner wall of container 49 is screwed. The vertical inclination and the horizontal orientation of mirror 48 can therefore be adjusted by rotating bolt 63 and screw 68, respectively. A pair of longitudinal seats 69 in which the transparent plates 41, 50 can be inserted in a sliding manner is preferably obtained in the sections forming containers 40, 49.

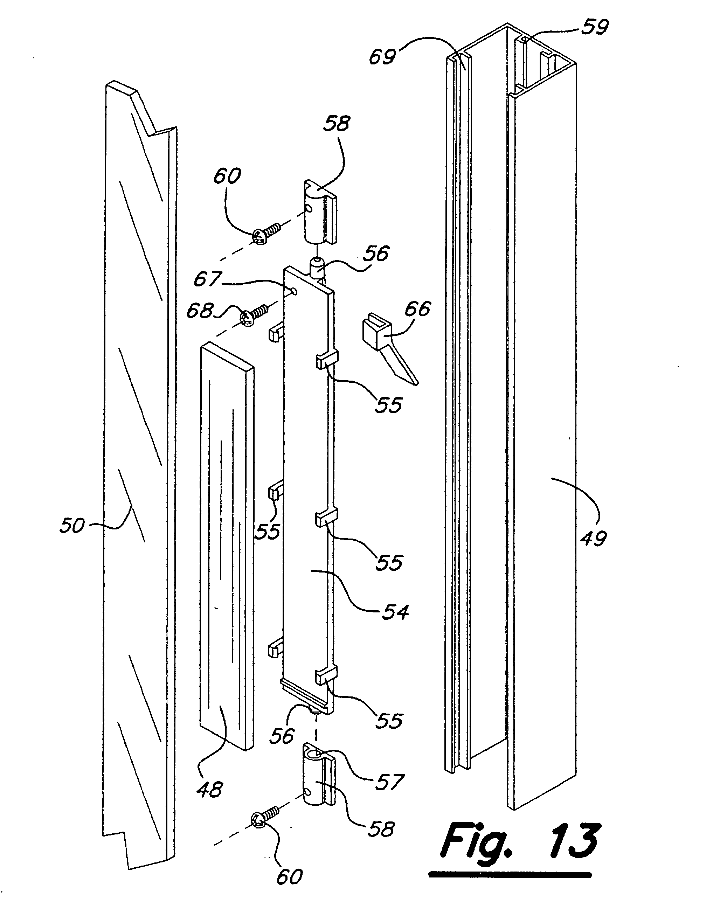

Referring finally to figure 13, it is seen that each of the other reflecting or refracting members 48 of the anti-theft device according to the third embodiment of the present invention always consists of a rectangular mirror mounted onto a plate 54 by means of a plurality of hooks 55. Two opposite sides of plate 54 are provided with pins 56 suitable for rotating into seats 57 obtained in a pair of members 58, which can slide in the longitudinal guide 59, and for being locked by screws 60. This plate 54 is always pushed outwards by a lamellar spring 66 fixed onto a side of the same plate, while a threaded hole 67 in which is screwed a screw 68 is obtained near the opposite side. Also the electronic boards 41 and 43 can be provided with members suitable for sliding in a longitudinal guide obtained in container 40.

All the above mentioned electric and/or electronic devices can be incorporated in boards 21, 22 and/or 41, 43 of the detection system of the anti-theft device according to the present invention by means of one or more printed circuits, thereby avoiding the connections with cables between a device and the other. At the end of the soldering of the devices, said boards are covered with a layer of hard resin in order to prevent any external tampering attempt and to avoid malfunctions due to oxidation, humidity or rust.

Further additions and/or modifications may be made by those skilled in the art to the above described and illustrated embodiments of the anti-theft device according to the present invention, without departing from the scope of the invention which is only limited according to the wording of the appended claims. In particular, those skilled in the art may change the shape of containers 30, 32, 34, 36, 40, 49 and of the relevant covers 27, 31, 33, 35, 41, 50 and may use electric and/or electronic devices differing from the above mentioned ones, but having analogous functions.

## Claims

1. Anti-theft device for buildings comprising a central unit (11) connected to at least one detection system provided with at least one optoelectronic receiver (3) sensitive to the light signal emitted by a light emitter (2), in particular infrared or laser, as well as with reflecting or refracting devices (12, 13) inserted into elongated containers with a longitutinal axis (30; 40, 49) suitable for being arranged along at least two opposite walls of the opening of a building so that the signal of the light emitter (2) is reflected or refracted from a wall to the other to the optoelectronic receiver (3), wherein said detection system also comprises means (5, 17) suitable for sending to the central unit (11) a signal variable according to the reception of said light signal in the optoelectronic receiver (3), **characterized in that** said reflecting or refracting devices (12, 13) comprise a plurality of reflecting or refracting members (28; 44, 48), in particular mirrors or prisms arranged along the longitudinal axis of the elongated containers (30; 40; 49), wherein said reflecting or rafracting members (28; 44, 48), the light emitter (2) and/or the optoelectronic receiver (3) are fixed onto means (23, 24, 25; 55, 66, 68) suitable for precisely adjusting their mutual orientation by rotation around at least two axes or by rotation around and translation along the longitudinal axis of the elongated containers, so that the signal of the light emitter (2) is reflected of refracted back and forth from one reflecting or refracting member (28; 48) of a reflecting or refracting device (13) to one reflecting or refracting member (28; 44) of another reflecting or refracting device (12) and so on.

2. Anti-theft device according to claim 1, **characterized in that** said means (5, 17) suitable for sending to the central unit (11) a signal indicating the reception of the light signal in the optoelectronic receiver (3) comprise a radio transmitter (5) electrically connected to the optoelectronic receiver (3) and a radio receiver (17) arranged into the central unit (11).

3. Anti theft device according to claim 2, **characterized in that** the signals transmitted by said radio transmitter (5) to said radio receiver (17) are coded.

4. Anti-theft device according to one of the previous claims, **characterized in that** the intensity and/or the frequency of the signal transmitted by the light emitter (2) are variable according to a coding process, and that the optoelectronic receiver (3) comprises means for decoding said coded signal.

5. Anti-theft device according to claim 1, **characterized in that** said means (23, 24, 25) suitable for precisely adjusting the mutual orientation of the reflecting or refracting members (28), the light emitter (2) and/or the optoelectronic receiver (3) comprise a plate (23) pushed by elastic means (25) and provided. with a plurality of boles in which screws (24) screwed in seats (20) protruding from the inside of said containers (30) are inserted.

6. Anti-theft device according to claim 1, **characterized in that** said means (55, 66, 68) suitable for precisely adjusting the mutual orientation of the reflecting or refracting members (44, 48) comprise a plate (54) pushed by elastic means (66) and provided with a threaded hole (67) in which a screw (68) is screwed, said elastic means (66) and said threaded hole (67) being arranged near the opposite sides of said plate (54).

7. Anti-theft device according to claim 6, **characterized in that** at least one side of the plate (54) is provided with a pin (56) suitable for rotating and/or oscillating in a seat (57) provided in a member (58) which can slide in a longitudinal guide (59) arranged in one of said containers (40, 49).

8. Anti-theft device according to claim 7, **characterized in that** the plate (54) is provided with an eyelet (61) in which a screw (62) is inserted in a sliding and oscillating manner, an end of said screw (62) being provided with a bolt (63) for locking the plate (54), the other end being fixed to a further member (64) suitable for sliding in the longitudinal guide (59).

9. Anti-theft device according to one of the previous claims, **characterized in that** the detection system comprises at least one movement sensor (4).

10. Anti-theit device according to claim 9, **characterized in that** said movement sensor (4) is connected through a relay (7) to said means (5, 17) suitable for sending to the central unit (11) a signal indicating the reception of the light signal in the optoelectronic receiver (3).

11. Anti-theft device according to one of the previous claims, **characterized in that** the detection system comprises a feeding battery (37).

12. Anti-theft device according to claim 11, **characterized in that** the battery (37) is arranged inside a housing (38) at the end of a container (40) comprising the light emitter (2) and the optoelectronic receiver (3).

13. Anti-theft device according to one of claims 1 to 10, **characterized in that** the detection system comprises a continuous voltage power source (1, 9) having an output terminal connected through a relay (16) to the feeding contacts of the light emitter (2) and of the optoelectronic receiver (3).

14. Anti-theft device according to claim 13, **characterized in that** the detection system comprises a buffer battery (15) having an output terminal connected through a relay (16) to the feeding contacts of the light emitter (2) and of the optoelectronic receiver (3).

15. Anti-theft device according to claim 14, **characterized in that** said buffer battery (15) is connected to an electric energy source through a battery charger (10).

16. Anti-theft device according to one of the previous claims, **characterized in that** the light emitter (2) and/or the optoelectronic receiver (3) are arranged in boards (21, 22; 41, 43) covered with a layer of hard resin.

17. Anti-theft device according to one of the previous claims, **characterized in that** one or more of said containers (30; 40, 49) comprise a U-shaped section (40, 49) provided with a pair of longitudinal seats (69) for a transparent plate (41, 50) acting as a front cover.

## Patentansprüche

1. Diebstahlsicherungsgerät für Gebäude, umfassend eine Zentraleinheit (11), die mit mindestens einem Erfassungssystem verbunden ist, das mit mindestens einem optoelektronischen Empfänger (3), der auf das Lichtsignal, das von einem Lichtemitter (2) abgegeben wird, insbesondere Infrarot oder Laser, empfindlich ist, sowie mit reflektierenden oder lichtbrechenden Vorrichtungen (12, 13) versehen ist, die in längliche Behälter (30; 40, 49) mit einer Längsachse eingefügt sind, welche sich dazu eignen, entlang mindestens zwei gegenüberliegenden Wänden der Öffnung eines Gebäudes angeordnet zu werden, so dass das Signal des Lichtemitters (2) von einer Wand zur anderen zum optoelektronischen Empfänger (3) reflektiert oder gebrochen wird, wobei das Erfassungssystem auch ein Mittel (5, 17) umfasst, welches, sich dazu eignet, ein Signal zur Zentraleinheit (11) zu senden, welches entsprechend dem Empfang des Lichtsignals im optoelektronischen Empfänger (3) variabel ist, **dadurch gekennzeichnet, dass** die reflektierenden oder lichtbrechenden Vorrichtungen (12, 13) eine Mehrzahl reflektierender oder lichtbrechender Glieder (28; 44, 48), insbesondere Spiegel oder Prismen, umfassen, welche die Längsachse der länglichen Behälter (30; 40, 49) entlang angeordnet sind, wobei die reflektierenden oder lichtbrechenden Glieder (28; 44, 48), der Lichtemitter (2) und/oder der optoelektronische Empfänger (3) auf Mittel (23, 24, 25; 55, 66, 68) befestigt sind, die sich zum exakten Einstellen ihrer gegenseitigen Ausrichtung eignen, durch Drehung um mindestens zwei Achsen oder durch Drehung um die und Verschiebung entlang der Längsachse der länglichen Behälter, so dass das Signal des Lichtemitters (2) von einem reflektierenden oder lichtbrechenden Glied (28; 48) einer reflektierenden oder lichtbrechenden Vorrichtung (13) zu einem reflektierenden oder lichtbrechenden Glied (28; 44) einer anderen reflektierenden oder lichtbrechenden Vorrichtung (12) hinund herreflektiert oder -gebrochen wird und so weiter.

2. Diebstahlsicherungsgerät nach Anspruch 1, **dadurch gekennzeichnet, dass** das Mittel (5, 17), das sich zum Senden eines Signals, welches den Empfang des Lichtsignals im optoelektronischen Empfänger (3) anzeigt, an die Zentraleinheit (11) eignet, einen Funksender (5) umfasst, der an den optoelektronischen Empfänger (3) elektrisch angeschlossen ist, und einen Funkempfänger (17), der in der Zentraleinheit (11) angeordnet ist.

3. Diebstahlsicherungsgerät nach Anspruch 2, **dadurch gekennzeichnet, dass** die Signale, die durch den Funksender (5) zum Funkempfänger (17) übertragen werden, kodiert sind.

4. Diebstahlsicherungsgerät nach einem der vorangehenden Ansprüche, **dadurch gekennzeichnet, dass** die Intensität und/oder die Frequenz des Signals, welches vom Lichtemitter (2) übertragen wird, entsprechend einem Kodiervorgang variabel sind und dass der optoelektronische Empfänger (3) Mittel zum Dekodieren des kodierten Signals umfasst.

5. Diebstahlsicherungsgerät nach Anspruch 1, **dadurch gekennzeichnet, dass** die Mittel (23, 24, 25), die sich zum exakten Einstellen der gegenseitigen Ausrichtung der reflektierenden oder lichtbrechenden Glieder (28), des Lichtemitters (2) und/oder des optoelektronischen Empfängers (3) eignen, eine Platte (23) umfassen, die durch ein elastisches Mittel (25) beaufschlagt wird und mit einer Mehrzahl von Löchern versehen ist, in welche Schrauben (24) eingefügt sind, die in Sitze (20) geschraubt sind, welche vom Inneren der Behälter (30) vorragen.

6. Diebstahlsicherungsgerät nach Anspruch 1, **dadurch gekennzeichnet, dass** die Mittel (55, 66, 68), die sich zum exakten Einstellen der gegenseitigen Ausrichtung der reflektierenden und lichtbrechenden Glieder (44, 48) eignen, eine Platte (54) umfassen, die durch ein elastisches Mittel (66) beaufschlagt wird und mit einem Gewindeloch (67) versehen ist, in welches eine Schraube (68) geschraubt ist, wobei das elastische Mittel (66) und das Gewindeloch (67) nahe den entgegengesetzten Seiten der Platte (54) angeordnet ist.

7. Diebstahlsicherungsgerät nach Anspruch 6, **dadurch gekennzeichnet, dass** mindestens eine Seite der Platte (54) mit einem Stift (56) versehen ist, der sich zum Drehen und/oder Schwingen in einem Sitz (57), der in einem Glied (58) vorgesehen ist, eignet, welches in einer Längsführung (59), die in einem der Behälter (40, 49) angeordnet ist, gleiten kann.

8. Diebstahlsicherungsgerät nach Anspruch 7, **dadurch gekennzeichnet, dass** die Platte (54) mit einer Öse (61) versehen ist, in welche eine Schraube (62) auf gleitende und hin- und hergehende Weise eingefügt ist, wobei ein Ende der Schraube (62) mit einem Bolzen (63) zum Sichern der Platte (54) versehen ist, wobei das andere Ende an einem weiteren Glied (64) befestigt ist, welches sich zum Gleiten in der Längsführung (59) eignet.

9. Diebstahlsicherungsgerät nach einem der vorangehenden Ansprüche, **dadurch gekennzeichnet, dass** das Erfassungssystem mindestens einen Bewegungsmelder (4) umfasst.

10. Diebstahlsicherungsgerät nach Anspruch 9, **dadurch gekennzeichnet, dass** der Bewegungsmelder (4) durch ein Relais (7) mit dem Mittel (5, 17) verbunden ist, das sich zum Senden eines Signals an die Zentraleinheit (11) eignet, welches den Empfang des Lichtsignals im optoelektronischen Empfängers (3) anzeigt.

11. Diebstahlsicherungsgerät nach einem der vorangehenden Ansprüche, **dadurch gekennzeichnet, dass** das Erfassungssystem eine Speisebatterie (37) umfasst.

12. Diebstahlsicherungsgerät nach Anspruch 11, **dadurch gekennzeichnet, dass** die Batterie (37) innerhalb eines Gehäuses (38) am Ende eines Behälters (40) angeordnet ist, welcher den Lichtemitter (2) und den optoelektronischen Empfänger (3) umfasst.

13. Diebstahlsicherungsgerät nach einem der Ansprüche 1 bis 10, **dadurch gekennzeichnet, dass** das Erfassungssystem eine Gleichspannungs-Stromquelle (1, 9) umfasst, welche eine Ausgangsklemme aufweist, die über ein Relais (16) mit den Speisekontakten des Lichtemitters (2) und des optoelektronischen Empfängers (3) verbunden ist.

14. Diebstahlsicherungsgerät nach Anspruch 13, **dadurch gekennzeichnet, dass** das Erfassungssystem eine Pufferbatterie (15) umfasst, welche eine Ausgangsklemme aufweist, die über ein Relais (16) mit den Speisekontakten des Lichtemitters (2) und des optoelektronischen Empfängers (3) verbunden ist.

15. Diebstahlsicherungsgerät nach Anspruch 14, **dadurch gekennzeichnet, dass** die Pufferbatterie (15) über ein Batterieladegerät (10) mit einer elektrischen Energiequelle verbunden ist.

16. Diebstahlsicherungsgerät nach einem der vorangehenden Ansprüche, **dadurch gekennzeichnet, dass** der Lichtemitter (2) und/oder der optoelektronische Empfänger (3) in Platten (21, 22; 41, 43) angeordnet sind, die mit einer Schicht aus hartem Harz überzogen sind.

17. Diebstahlsicherungsgerät nach einem der vorangehenden Ansprüche, **dadurch gekennzeichnet, dass** einer oder mehrere der Behälter (30; 40, 49) ein U-förmiges Profil (40, 49) umfassen, das mit einem Paar von Längssitzen (69) für eine transparente Platte (41, 50), die als Frontabdeckung dient, versehen ist.

## Revendications

1. Dispositif antivol pour bâtiments comprenant une unité centrale (11) connectée à au moins un système de détection pourvu d'au moins un récepteur optoélectronique (3) sensible à un signal lumineux émis par un émetteur lumineux (2), en particulier infrarouge ou laser, ainsi que de dispositifs réfléchissants ou réfracteurs (12, 13) insérés dans des conteneurs allongés avec un axe longitudinal (30 ; 40, 49) adaptés à être disposés le long d'au moins deux murs opposés de l'ouverture d'un bâtiment de sorte que le signal de l'émetteur lumineux (2) est réfléchi ou réfracté d'un mur à l'autre vers le récepteur optoélectronique (3), dans lequel ledit système de détection comprend également des moyens (5, 17) adaptés à envoyer vers l'unité centrale (11) un signal variable selon la réception dudit signal lumineux dans le récepteur optoélectronique (3), **caractérisé en ce que** lesdits dispositifs réfléchissants ou réfracteurs (12, 13) comprennent plusieurs éléments réfléchissants ou réfracteurs (28 ; 44, 48), en particulier des miroirs ou des prismes, disposés le long de l'axe longitudinal des conteneurs allongés (30 ; 40 ; 49) dans lequel lesdits éléments réfléchissants ou réfracteurs (28 ; 44, 48), l'émetteur lumineux (2) et/ou le récepteur optoélectronique (3) sont fixés sur des moyens (23, 24, 25 ; 55, 66, 68) adaptés à ajuster avec précision leur orientation mutuelle par rotation autour d'au moins deux axes ou par rotation autour et en translation le long de l'axe longitudinal des conteneurs allongés, de telle sorte que le signal de l'émetteur lumineux (2) réfléchi ou réfracté en retour ou en avant vers un élément réfléchissant ou réfracteur (28 ; 48) d'un dispositif réfléchissant ou réfracteur (13) vers un élément réfléchissant ou réfracteur (28 ; 44) d'un autre dispositif réfléchissant ou réfracteur (12) et ainsi de suite.

2. Dispositif antivol selon la revendication 1, **caractérisé en ce que** lesdits moyens (5, 17) adaptés pour envoyer à l'unité centrale (11) un signal indiquant la réception du signal lumineux dans le récepteur optoélectronique (3) comprend un transmetteur radio (5) connecté électriquement au récepteur optoélectronique (3) et un récepteur radio (17) disposés dans l'unité centrale (11).

3. Dispositif antivol selon la revendication 2, **caractérisé en ce que** les signaux transmis par ledit transmetteur radio (5) vers ledit récepteur radio (17) sont codés.

4. Dispositif antivol selon l'une des revendications précédentes, **caractérisé en ce que** l'intensité et/ou la fréquence du signal transmis par l'émetteur lumineux (2) sont variables selon un procédé de codage, et **en ce que** le récepteur optoélectronique (3) comprend des moyens pour décoder ledit signal codé.

5. Dispositif antivol selon la revendication 1, **caractérisé en ce que** lesdits moyens (23, 24, 25) adaptés pour ajuster avec précision l'orientation mutuelle des éléments réfléchissants ou réfracteurs (28), l'émetteur lumineux (2) et/ou le récepteur optoélectronique (3) comprennent une plaque (23) poussée par des moyens élastiques (25) et pourvue de plusieurs trous dans lesquels des vis (24) vissés dans des sièges (20) saillants à partir de l'intérieur desdits conteneurs (30) sont insérées.

6. Dispositif antivol selon la revendication 1, **caractérisé en ce que** lesdits moyens (55, 66, 68) adaptés pour ajuster avec précision l'orientation mutuelle des éléments réfléchissants ou réfracteurs (44,48) comprennent une plaque (54) poussée par des moyens élastiques (66) et pourvus d'un trou fileté (67) dans lequel une vis (68) est vissée, lesdits moyens élastiques (66) et ledit trou fileté (67) étant disposés à proximité des côtés opposées de ladite plaque (54).

7. Dispositif antivol selon la revendication 6, **caractérisé en ce qu'**au moins un côté de la plaque (54) est pourvu d'une broche (56) adaptée à tourner et/ou à osciller dans un siège (57) prévu dans un élément (58) qui peut coulisser dans un guide longitudinal (59) disposé dans un desdits conteneurs (40, 49).

8. Dispositif antivol selon la revendication 7, **caractérisé en ce que** la plaque (54) est pourvue d'une fenêtre (61) dans laquelle une vis (62) est insérée d'une manière coulissante ou oscillante, une extrémité de ladite vis (62) étant pourvue d'un boulon (63) pour bloquer la plaque (54), l'autre extrémité étant fixée à un autre élément (64) adapté à coulisser dans le guide longitudinal (59).

9. Dispositif antivol selon l'une des revendications précédentes, **caractérisé en ce que** le système de détection comprend au moins un capteur de mouvement (4).

10. Dispositif antivol selon la revendication 9, **caractérisé en ce que** ledit capteur de mouvement (4) est connecté dans l'intermédiaire d'un relais (7) auxdits moyens (5, 17) adaptés à envoyer à l'unité centrale (11) un signal indiquant la réception du signal lumineux dans le récepteur optoélectronique (3).

11. Dispositif antivol selon l'une des revendications précédentes, **caractérisé en ce que** le système de détection comprend une batterie d'alimentation (37).

12. Dispositif antivol selon la revendication 11, **caractérisé en ce que** la batterie (37) est disposée à l'intérieur d'un boîtier (38) à l'extrémité d'un conteneur (40) comprenant l'émetteur lumineux (2) et le récepteur optoélectronique (3).

13. Dispositif antivol selon l'une des revendications 1 à 10, **caractérisé en ce que** le système de détection comprend une source de tension continue (1, 9) ayant une borne de sortie connectée par l'intermédiaire d'un relais (16) à des contacts d'alimentation de l'émetteur lumineux (2) et du récepteur optoélectronique (3).

14. Dispositif antivol selon la revendication 13, **caractérisé en ce que** le système de détection comprend une batterie tampon (15) ayant une borne de sortie connectée par l'intermédiaire d'un relais (16) au contact d'alimentation de l'émetteur lumineux (2) et du récepteur optoélectronique (3).

15. Dispositif antivol selon la revendication 14, **caractérisé en ce que** ladite batterie tampon (15) est connecté à une source d'énergie électrique par l'intermédiaire d'un chargeur de batterie (10).

16. Dispositif antivol selon l'une des revendications précédentes, **caractérisé en ce que** l'émetteur lumineux (2) et/ou le récepteur optoélectronique (3) sont disposés dans des panneaux (21, 22 ; 41, 43) recouverts d'une couche de résine dure.

17. Dispositif antivol selon l'une des revendications précédentes, **caractérisé en ce que** un ou plusieurs desdits conteneurs (30 ; 40, 49) comprend une section en forme de U (40, 49) pourvue d'une paire de sièges longitudinaux (69) pour une plaque transparente (41, 50) servant de façade.
